Europäisches Patentamt

European Patent Office

Office européen des brevets

(11) Publication number: **0 105 625**
**B1**

# EUROPEAN PATENT SPECIFICATION

(45) Date of publication of patent specification: **18.01.89**　　(51) Int. Cl.⁴: **B 24 B 5/35**

(21) Application number: **83305139.4**

(22) Date of filing: **05.09.83**

(54) Centerless grinding machine loader.

(30) Priority: **03.09.82 US 414848**

(43) Date of publication of application:
**18.04.84 Bulletin 84/16**

(45) Publication of the grant of the patent:
**18.01.89 Bulletin 89/03**

(84) Designated Contracting States:
**DE FR GB IT**

(56) References cited:
**FR-A-1 368 111**
**FR-A-2 307 770**
**US-A-2 792 953**
**US-A-2 864 209**
**US-A-2 912 798**
**US-A-3 879 902**

(73) Proprietor: **Litton Industrial Automation
Systems, Inc.
7900 Tanners Gate
Florence, Kentucky 41042 (US)**

(72) Inventor: **Shank, William E.
77 Briar Ridge Drive
Waynesboro Pennsylvania 17268 (US)**
Inventor: **Bercaw, Kenneth K.
13654 Lower Edgemont Road
Waynesboro Pennsylvania 17268 (US)**

(74) Representative: **Warren, Anthony Robert et al
BARON & WARREN 18 South End Kensington
London W8 5BU (GB)**

Courier Press, Leamington Spa, England.

## Description

Automatic loading and unloading of shafts with spaced diameters to be ground into and out of a centreless grinding machine normally requires an inordinate amount of floor space and often poses a safety problem as the parts are swung through a wide arc in the process.

The invention relates to a loader of the type comprising a generally vertical support column, elongate arms for loading and unloading elongate workpieces, provided with hydraulically actuated means for selectively gripping and releasing workpieces, means for pivoting each of said arms approximately 90° between generally horizontally and vertically extending positions, about a generally horizontal shaft secured to said generally vertical column, and loader rotation means for rotating said vertical column about a generally vertical axis.

US—A—2792953 discloses a mechanical handling mechanism of this type which has gripping means rotatably mounted at the end of each arm so as to enable an elongate workpiece, when gripped thereby, to be turned relative to the arm between vertical and horizontal positions. In operation, a workpiece is gripped by the gripping means, and if the workpiece is initially disposed vertically, it is reoriented in a horizontal position by turning the gripping means. The horizontally disposed workpiece is then transferred to another location by rotating the column about its vertical axis, whereafter the gripping means is released. Since the horizontal elongate workpiece projects laterally of the column as it is swung around the column, the handling mechanism suffers from the previously outlined problems.

It is an object of the invention to provide a centerless grinding machine loader for handling relatively long workpieces, such as automotive cam shafts, which is capable of minimizing floor space requirements and virtually eliminating the safety problem.

From one aspect, the present invention provides a centerless grinding machine loader for automatic loading and unloading of a grinder, of the aforesaid type, which is characterised in that the gripping means associated with each arm comprises spring-loaded hydraulically actuated pin-engagement means carried by the arm and spaced apart longitudinally therealong by a distance to accommodate therebetween an elongate workpiece, the pin-engagement means being longitudinally advanceable to engage and grip opposite ends of the workpiece when located therebetween, thereby to releasably lock the workpiece to the arm with the workpiece extending generally in the same longitudinal direction as the arm and to constrain the workpiece to move in unison with the arm between said generally horizontally and vertically extending positions, and means being provided to sense when the arms are pivoted about their associated shafts to locate the arms, and workpieces when operatively gripped by the associated gripping means, in generally vertical positions, and to enable the loader rotation means to rotate the column and generally vertically positioned arms and workpieces approximately 180° about said generally vertical axis.

From another aspect, the invention provides a centerless grinding machine loader for automatic loading and unloading of a grinder, of the aforesaid type, in combination with workpieces to be loaded and unloaded, the loader being characterised in that the gripping means associated with each arm comprises spring-loaded, hydraulically actuated longitudinally advanceable pin-engagement means releasably gripping an elongate workpiece with the workpiece extending generally in the same longitudinal direction as the arm, and constrained to move in unison with the arm between said generally horizontally and vertically extending positions, and means being provided to sense when the arms are pivoted about their associated shafts to locate the arms, and workpieces gripped by the associated gripping means, in generally vertical positions, and to enable the loader rotation means to rotate the column and generally vertically positioned arms and workpieces approximately 180° about said generally vertical axis.

The means loader embodying the invention is capable of automatically engageing and disengaging the workpiece at both the load/unload and work stations, and avoids swinging the workpiece through a large radius when transitioning between stations.

The loader may be employed in conjunction with a centerless grinder with a pivotable grinding wheelhead having a plurality of grinding wheels to simultaneously grind an equal number of spaced diameters.

In order that the invention may be more readily understood, reference will now be made to the accompanying drawings, in which:—

Figure 1 is a perspective view of a centerless grinding machine loader embodying this invention, with the arms in the horizontal, load/unload and work position;

Figure 2 is a perspective view of the loader shown in Figure 1, with the arms vertical for rotation of the housing;

Figure 3 is a partially sectioned side view of the arm drive mechanism; and

Figure 4 is a sectional top view of the loader spindle rotating mechanism.

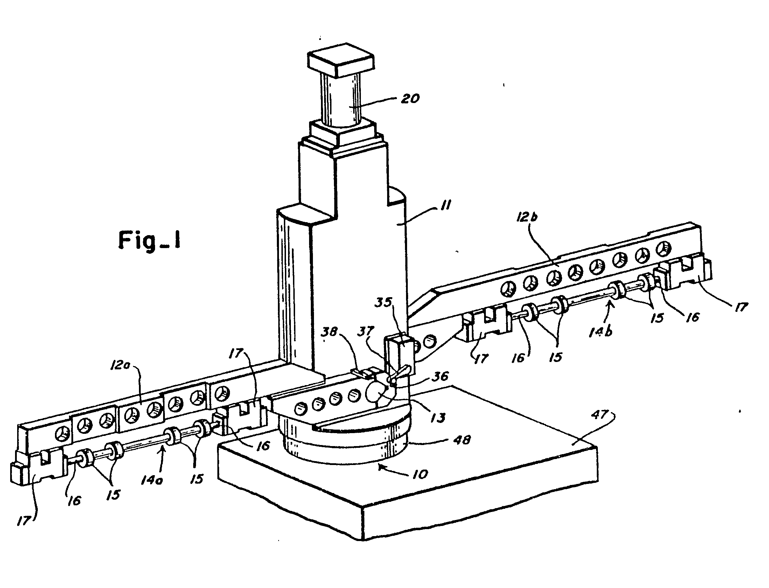

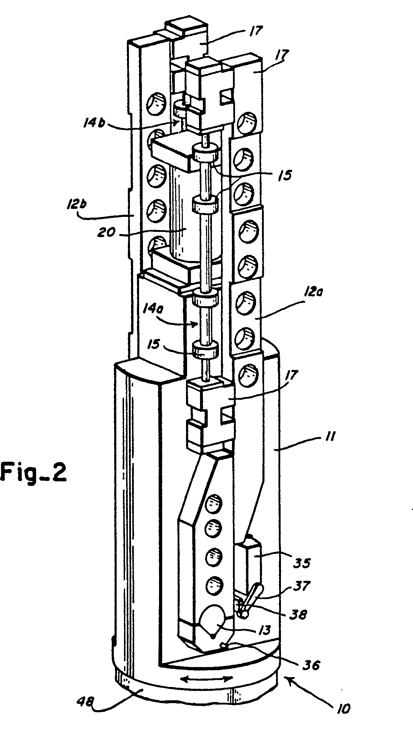

Referring to Figures 1 and 2, the centerless grinding machine loader 10 is comprised of a column in the form of a main housing 11 which pivotally supports arms 12a and 12b at pivots 13 (one shown). Arms 12a and 12b are disposed on opposite sides of the housing 11. Workpieces 14a and 14b, which have a plurality of axially spaced diameters 15 to be ground, are each supported between a pair of gripping devices carried by and spaced apart longitudinally on the associated arm, with the workpiece extending generally parallel to, and adjacent the arm. More particularly, the workpieces are supported between pins 16 which extend from hydraulic actuator housings 7 of the gripping devices under a spring load and enter the machined centers of the workpiece.

The loader cycles to position a workpiece 14a at the centerless grinder (not shown) and releases the workpiece by hydraulically withdrawing spring loaded pins 16. At the conclusion of the machining cycle, pins 16 re-engage the workpiece 14a as the opposite arm 12b engages an unmachined workpiece 14b. The arms simultaneously rotate about the horizontal axes of the pivots 13, by 90° to a vertical position, Figure 2, and the housing 11 then rotates 180° about its vertical axis. The arms are lowered to the horizontal position and pins 16 of both arms 12 are withdrawn, loading the unground workpiece 14b into the grinder and depositing the ground workpiece 14a onto a conveyor device (not shown) to be carried to the next operating station. Unground pieces are supplied to the loader and ground pieces are displaced away from the loader by an automatic conveyor (not shown).

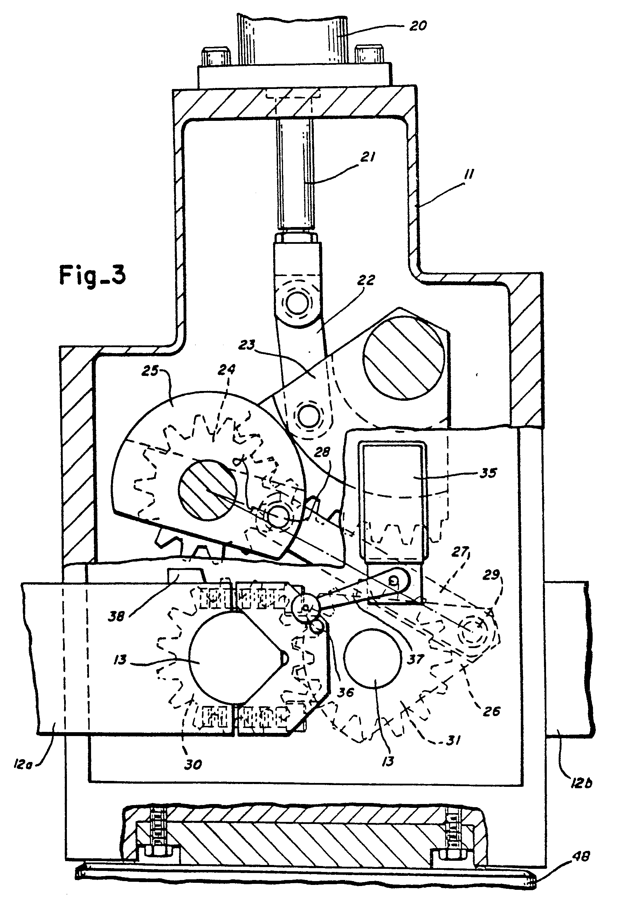

At the end of a machining cycle, the arms 12 are caused to simultaneously rotate through 90° to a vertical position, as a hydraulic constant-velocity actuator 20, acting through its arm 21, seen in Figure 3, and link 22 which is pivotally attached to both arm 21 and a segment gear 23, causes the segment gear 23 to rotate in a clockwise direction. The segment gear 23 engages spur gear 24 which is coupled to a yoke 25. Yoke 26 is mounted to the arm 12b and raises the arm 90° as the link 27, which is pivotally mounted to yokes 25 and 26 at pivots 28 and 29, moves with the counterclockwise rotation of spur gear 24 and yoke 25. The second arm, 12a is raised 90° through the engagement of gears 30 and 31 which are mounted to arms 12a and 12b, respectively.

The bellcrank construction of this drive train powered by the constant velocity actuator 20 causes the velocity of rotation of the arms 12a and 12b to vary as a function of the sine of the angle alpha described by lines extending from the center of gear 24 to the centers of pivots 28 and 29. This results in the arms reaching maximum velocity at the center of travel and slowing to a stop at the limits, and thus obviating high inertial loads.

A limit switch 35 is activated when the arms 12a and 12b are horizontal and a pin 36 engages switch arm 37. This position indication initiates the machine operation, as well as the unloading of the finished and the reloading of an unfinished piece. The arm 37 engages lug 38 in the vertical position of the arms, activating the housing 11 rotation sequence and deactivating the rotation circuit safety lockout.

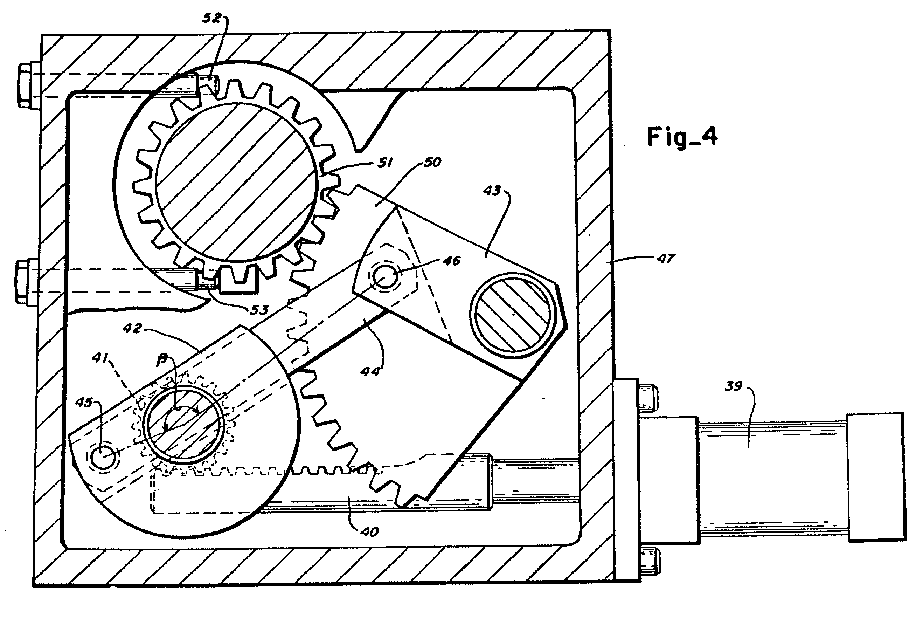

With the arms 12a and 12b in the vertical position, housing 11, which is rotatably mounted to the base 47 at column 48, as best seen in Figure 3, is positioned to rotate. Referring to Figure 4, the 180° rotation of the housing 11 is accomplished as a constant velocity actuator 39 drives a gear rack 40 which engages a pinion gear 41. Attached to gear 41 is yoke 42 which drives a yoke 43 through a link 44 connected to the yokes at pivots 45 and 46, respectively. Gear segment 50 is coupled to yoke 43 and meshes with a main housing spindle gear 51. Spindle gear 51 is attached to a column 48 and rotates housing 11. Stops 52 and 53 act on a land 54 to limit the housing rotation.

This bellcrank construction also controls the velocity of rotation of the housing 11 by converting the constant velocity of the actuator 39 and gear rack 40 to vary according to the sine of the angle beta. The angle beta is described by lines extending from the center of gear 41 to the center of pivots 45 and 46. This results in the loader reaching maximum velocity at the center of travel and slowing to a stop at the limits, and thus obviating high inertial loads.

As will be apparent from the drawings, the axes of the arm pivots 13 are approximately radial to, i.e. closely adjacent, the vertical rotational axis of the housing 11. Furthermore, as shown in Figure 2, the arms 12a, 12b and workpieces 14a, 14b, when swung vertically, are inset relative to the housing 11, i.e. are located wholly within the cylindrical figure swept out by the column when rotated about its vertical axis.

## Claims

1. A centerless grinding machine loader for automatic loading and unloading of a grinder, comprising a generally vertical support column (11), elongate arms (12a, 12b) for loading and unloading elongate workpieces (14a, 14b), provided with hydraulically actuated (17) means (16) for selectively gripping and releasing workpieces, means (20—26, 30, 31), for pivoting each of said arms approximately 90° between generally horizontally and vertically extending positions, about a generally horizontal shaft (13) secured to said generally vertical column, and loader rotation means (39—46, 48, 50, 51) for rotating said vertical column about a generally vertical axis, characterised in that the gripping means associated with each arm (12a, 12b) comprises spring-loaded hydraulically actuated (17) pin-engagement means (16) carried by the arm and spaced apart longitudinally therealong by a distance to accommodate therebetween an elongate workpiece, the pin-engagement means (16) being longitudinally advanceable to engage and grip opposite ends of the workpiece (14a, 14b) when located therebetween, thereby to releasably lock the workpiece (14a, 14b) to the arm (12a, 12b) with the workpiece (14a, 14b) extending generally in the same longitudinal direction as the arm (12a, 12b) and to constrain the workpiece (14a, 14b) to move in unison with the arm (12a, 12b) between said generally horizontally and vertically extending positions, and means (35) being provided to sense when the arms (12a, 12b) are pivoted about their associated shafts (13) to locate the arms (12a, 12b), and workpieces (14a, 14b) when operatively gripped by the associated gripping means, in generally vertical positions, and to enable the loader rotation means to rotate the column and generally vertically positioned arms (12a, 12b) and workpieces (14a, 14b) approximately 180° about said generally vertical axis.

2. A centerless grinding machine loader for automatic loading and unloading of a grinder, in combination with elongate workpieces to be loaded into or unloaded from the grinder, the loader comprising a generally vertical support column (11), elongate arms (12a, 12b) provided with hydraulically actuated (17) means (16) for selectively gripping and releasing workpieces (14a, 14b), means (20, 26, 30, 31), for pivoting each of said arms approximately 90° between generally horizontally and vertically extending positions, about a generally horizontal shaft (13) secured to said generally vertical column, and loader rotation means (39—46, 48, 50, 51) for rotating said vertical column about a generally vertical axis, characterised in that the gripping means associated with each arm (12a, 12b) comprises spring-loaded hydraulically actuated (17) longitudinally advanceable pin-engagement means (16) releasably gripping an elongate workpiece (14a, 14b) with the workpiece (14a, 14b) extending generally in the same longitudinal direction as the arm (12a, 12b) and constrained to move in unison with the arm (12a, 12b) between said generally horizontally and vertically extending positions, and means (35) being provided to sense when the arms (12a, 12b) are pivoted about their associated shafts (13) to locate the arms (12a, 12b), and workpieces (14a, 14b) gripped by the associated gripping means, in generally vertical positions, and to enable the loader rotation means to rotate the column and generally vertically positioned arms (12a, 12b) and workpieces (14a, 14b) approximately 180° about said generally vertical axis.

3. A loader and workpiece combination according to claim 2, wherein the gripping means (16, 17) associated with each arm (12a, 12b) comprises two gripping devices carried by and spaced apart longitudinally on the associated arm (12a, 12b), a workpiece being gripped between, and extending generally longitudinally between, the two gripping devices, adjacent the associated arm (12a, 12b).

4. A loader according to claim 1, or a loader and workpiece combination according to claim 2 or 3, wherein said arm-pivoting means provides means for reducing arm velocity at or towards the limits of arm travel.

5. A loader or loader and workpiece combination according to any preceding claim, wherein said loader rotation means provides means for reducing column rotation velocity at or towards the limits of column travel.

6. A loader or loader and workpiece combination according to any preceding claim, wherein the arms (12a, 12b) and workpieces gripped, or when operatively gripped, by the gripping means (16, 17), and when in their generally vertical positions, are inset with respect to the column (11) so as to be disposed effectively wholly within the cylindrical figure swept out by the column (11) when rotated about the generally vertical axis.

7. A loader or loader and workpiece combination according to any preceding claim, wherein the axis of each generally horizontal shaft is closely adjacent the generally vertical axis of the column (11).

**Patentansprüche**

1. Ladevorrichtung für eine spitzenlose Schleifmaschine zum automatischen Laden und Entladen der Schleifmaschine, enthaltend eine im allgemeinen vertikale Stützsäule (11), zum Laden und Entladen länglicher Werkstücke (14a, 14b) bestimmte, längliche Arme (12a, 12b), die mit hydraulisch (17) betätigten Mitteln (16) zum wahlweisen Ergreifen und Lösen von Werkstücken versehen sind, Mittel (20—26, 30—31) zum Schwenken jedes Armes um 90° zwischen sich im allgemeinen horizontal und vertikal erstreckenden Stellungen um eine im allgemeinen horizontale Welle (13), die an der vertikalen Säule befestigt ist, und Laderdrehmittel (39—46, 48, 50, 51) zum Drehen der vertikalen Säule um eine im allgemeinen vertikale Achse, dadurch gekennzeichnet, daß die jedem Arm (12a, 12b) zugeordneten Greifmittel federbelastete, hydraulisch betätigte (17) Zapfengreifmittel (16), die an dem Arm angeordnet sind und entlang desselben voneinander einen Abstand aufweisen, um zwischen sich ein längliches Werkstück aufzunehmen, wobei die Zapfengreifmittel (16) in Längsrichtung vorbewegbar sind, um mit den gegenüberliegenden Enden des Werkstückes in Eingriff zu gelangen und diese zu ergreifen, wenn das Werkstück dazwischen plaziert ist, um dadurch das Werkstück (14a, 14b), das sich im allgemeinen in derselben Längsrichtung erstreckt wie der Arm, an dem Arm lösbar zu befestigen und um das Werkstück (14a, 14b) zu zwingen, sich im Gleichgang mit dem arm (12a, 12b) zwischen den sich im allgemeinen horizontal und vertikal erstreckenden Stellungen zu bewegen, und Mittel (35) umfassen, die zum Abtasten vorgesehen sind, wenn die Arme (12a, 12b) um ihre zugehörige Welle (13) verschwenkt werden, um die Arme (12a, 12b) und die Werkstücke (14a, 14b), wenn diese von den zugehörigen Greifmitteln ladebereit ergriffen sind, in im allgemeinen vertikaler Stellung festzustellen und um den Ladedrehmitteln zu ermöglichen, die Säule und die im allgemeinen vertikal gestellten Arme (12a, 12b) und die Werkstücke (14a, 14b) etwa 180° um die im allgemeinen vertikale Achse zu drehen.

2. Ladevorrichtung für eine spitzenlose Schleifmaschine zum automatischen Laden und Entladen der Schleifmaschine in Kombination mit einem länglichen Werkstück, das in die Schleifmaschine zu laden und aus ihr zu entladen ist, wobei die Vorrichtung eine im wesentlichen vertikale Stützsäule (11), längliche Arme (12a, 12b), die mit hydraulisch betätigten (17) Mitteln (16) zum wahlweisen Greifen und Lösen von Werkstücken (14a, 14b) versehen sind, Mittel (20, 26, 30, 31) zum Schwenken jedes Armes etwa um 90° zwischen im allgemeinen sich horizontal und vertikal erstreckenden Stellungen um eine im allgemeinen horizontale Welle (13), die an der im allgemeinen vertikalen Säule befestigt ist, und Laderdrehmittel (39—46, 48, 50 51) zum Drehen der vertikalen Säule um eine im allgemeinen vertikale Achse umfaßt, dadurch gekennzeichnet, daß die jedem Arm (12a, 12b) zugeordneten Greifmittel federbelastete, hydraulisch betätigte, in Längsrichtung vorbewegbare Zapfeneingriffsmittel (16), die ein Werkstück (14a, 14b) lösbar greifen, wobei sich das Werstück im allgemeinen in der gleichen Längsrichtung erstreckt wie der Arm (12a, 12b), un gezwungen sind, sich im Gleichgang mit dem Arm zwischen den im allgemeinen sich horizontal und vertikal ersteckenden Stellungen zu bewegen, und Mittel (35) umfassen, die zum Abtasten vorgesehen sind, wenn die Arme (12a, 12b) um ihre zugehörige Welle (13) gedreht werden, um die Arme und die Werkstücke (14a, 14b), die durch die zugehörigen Greifmittel ergriffen sind, in den im allgemeinen vertikalen Stellungen festzustellen und um den Laderdrehmitteln zu ermöglichen, die Säule und die im allgemeinen vertikal positionierten Arme (12a, 12b) und die Werkstücke (14a, 14b) etwa 180° um die im allgemeinen vertikale Achse zu drehen.

3. Ladevorrichtung in Kombination mit einem Werkstück nach Anspruch 2, dadurch gekennzeichnet, daß die jeder Arm (12a, 12b) zugeordneten Greifmittel (16, 17) zwei Greifeinrichtungen umfassen, die von dem zugeordneten Arm (12a, 12b) getragen werden und daran in Längsrichtung voneinander beabstandet sind, und daß ein Werkstück zwischen den beiden Greifeinrichtungen benachbart zu dem zugehörigen Arm (12a, 12b) ergriffen wird und sich im allgemeinen in Längsrichtung dazwischen erstreckt.

4. Ladevorrichtung nach Anspruch 1 oder Ladevorrichtung in Kombination mit einem Werkstück nach Anspruch 2 oder 3, dadurch gekennzeichnet, daß die Schwenkmittel Mittel zum Reduzieren der Armgeschwindigkeit an den oder in Richtung der Grenzen der Armbewegung vorsehen.

5. Ladevorrichtung oder Ladevorrichtung in Kombination mit einem Werkstück nach einem vorangehenden Anspruch, dadurch gekennzeichnet, daß die Laderdrehmittel Mittel zum Reduzieren der Säulendrehgeschwindigkeit an den oder in Richtung der Grenzen der Säulenbewegung vorsehen.

6. Ladevorrichtung oder Ladevorrichtung in Kombination mit einem Werkstück nach einem vorangehenden Anspruch, dadurch gekennzeichnet, daß die Arme (12a, 12b) und die durch die Greifeinrichtungen (16, 17) ergriffenen oder ladebereit ergriffenen Werkstücke in Bezug auf die Säule (11) so eingesetzt sind, daß sie sich tatsächlich vollständig innerhalb der zylindrischen Figur befinden, die durch die Säule (11) bei ihrer Drehung um die im allgemeinen vertikale Achse überstrichen wird.

7. Ladevorrichtung oder Ladevorrichtung in Kombination mit einem Werkstück nach einem vorangehenden Anspruch, dadurch gekennzeichnet, daß die Achse jeder im allgemeinen horizontalen Welle zu der im allgemeinen vertikalen Achse der Säule (11) dicht benachbart ist.

**Revendications**

1. Chargeur pour machine à meuler sans centre pour le chargement et le déchargement automatiques d'une machine à meuler, comprenant une colonne support (11) généralement verticale, des bras allongés (12a, 12b) pour charger et décharger des pièces d'usinage (14a, 14b) allongées, munie de moyens (16) actionnés hydrauliquement (17) pour accrocher et décrocher sélectivement des pièces d'usinage, des moyens (20—26, 30, 31) pour faire pivoter chacun desdits bras approximativement selon 90° entre des positions s'étendant généralement horizontalement et verticalement, selon un arbre (13) généralement horizontal solidaire de ladite colonne généralement verticale, et des moyens de rotation de chargeur (39—46, 48, 50, 51) pour faire tourner ladite colonne verticale autour d'un axe généralement vertical, caractérisé en ce que le moyen d'accrochage associé à chaque bras (12a, 12b) comprend des moyens (16) à engagement de broche actionnés hydruliquement (17) et sollicités par ressort portés par le bras et espacés longitudinalement sur le bras selon une certaine distance pour disposer entre eux une pièce d'usinage allongée, les moyens (16) à engagement de broche étant déplaçables longitudinalement pour entrer en engagement et accrocher des extrémités opposées de la pièce d'usinage (14a, 14b) lorsqu'elle est logée entre eux, pour verrouiller ainsi de manière détachable la pièce d'usinage (14a, 14b) au bras (12a, 12b) avec la pièce d'usinage (14a, 14b) s'étendant généralement dans la même direction longitudinale que le bras (12a, 12b) et pour forcer la pièce d'usinage (14a, 14b) à se déplacer à l'unisson avec le bras (12a, 12b) entre lesdites positions s'étendant généralement horizontalement et verticalement, et un moyen (35) étant prévu pour détecter lorsque les bras (12a, 12b) sont pivotés autour de leurs arbres (13) associés pour loger les bras (12a, 12b), et les pièces d'usinage (14a, 14b) lorsqu'elles sont accrochées fonctionnellement par les moyens d'accrochage associés, selon des positions généralement verticales, et pour permettre aux moyens de rotation de chargeur d'entraîner en rotation la colonne et les bras (12a, 12b) positionnés généralement verticalement et les pièces d'usinage (14a, 14b) selon approximativement 180° autour dudit axe généralement vertical.

2. Chargeur pour machine à meuler sans centre pour le chargement et le déchargement automatique d'une machine à meuler, en combinaison avec des pièces d'usinage allongées devant être chargées ou déchargées de la machine à meuler, le chargeur comprenant une colonne support (11) généralement verticale, des bras allongés (12a, 12b) munis de moyens (16) actionnés hydrauliquement (17) pour accrocher et décrocher sélectivement des pièces d'usinage (14a, 14b), des moyens (20—26, 30, 31) pour faire pivoter chacun desdits bras approximativement selon 90° entre des positions s'étendant généralement horizontalement et verticalement, autour d'un arbre (13) généralement horizontal solidaire de ladite colonne généralement verticale, et des moyens de rotation de chargeur (39—46, 48, 50, 51) pour faire tourner ladite colonne verticale autour d'un axe généralement vertical, caractérisé en ce que les moyens d'accrochage associés à chaque bras (12a, 12b) comprennent des moyens (16) à engagement de broche déplaçables longitudinalement actionnés hydrauliquement (17) et sollicités par ressort pour accrocher de manière détachable une pièce d'usinage allongée (14a, 14b) avec la pièce d'accrochage (14a, 14b) s'étendant généralement dans la même direction longitudinale que le bras (12a, 12b), et forcée à se déplacer à l'unisson avec le bras (12a, 12b) entre lesdites positions s'étendant généralement horizontalement et verticalement, et un moyen (35) étant prévu pour détecter lorsque les bras (12a, 12b) sont pivotés autour de leurs arbres (13) associés pour orienter les bras (12a, 12b), et les pièces d'usinage (14a, 14b) accrochées par leurs moyens d'accrochage associés, selon des positions généralement verticales, et pour permettre aux moyens de rotation de chargeur d'entraîner en rotation la colonne et les bras (12a, 12b) positionnés généralement verticalement et les pièces d'usinage (14a, 14b) approximativement selon 180° autour dudit axe généralement vertical.

3. Combinaison d'un chargeur et d'une pièce d'usinage selon la revendication 2, dans laquelle les moyens d'accrochage (16, 17) associés avec chaque bras (12a, 12b) comprennent deux dispositifs d'accrochage portés et écartés l'un de l'autre longitudinalement sur le bras associé (12a, 12b), une pièce d'usinage étant accrochée entre les deux dispositifs d'accrochage, et s'étendant généralement longitudinalement entre les deux dispositifs d'accrochage, adjacente au bras associé (12a, 12b).

4. Chargeur selon la revendication 1, ou combinaison d'un chargeur et d'une pièce d'usinage selon la revendication 2 ou la revendication 3, dans lequel ledit moyen de pivotement de bras comprend des moyens pour réduire la vitesse de bras aux limites ou au voisinage des limites de course de bras.

5. Chargeur ou combinaison d'un chargeur et d'une pièce d'usinage selon l'une quelconque des revendications précédentes, dans lequel lesdits moyens de rotation de chargeur comprennent des moyens pour réduire la vitesse de rotation de colonne aux limites ou vers les limites de course de colonne.

6. Chargeur ou combinaison d'un chargeur et de pièce d'usinage selon l'une quelconque des revendications précédentes, dans lequel les bras (12a, 12b) et les pièces d'usinage accrochées, ou accrochées fonctionnellement, par les moyens d'accrochage (16, 17), et lorsqu'ils sont dans leurs positions généralement verticales, sont insérés par rapport à la colonne (11) de manière à être disposés effectivement entièrement à l'intérieur de la figure cylindrique balayée par la colonne (11) lorsqu'elle tourne autour de l'axe généralement vertical.

7. Chargeur ou combinaison d'un chargeur et d'une pièce d'usinage selon l'une quelconque des revendications précédentes, dans lequel l'axe de chaque bras généralement horizontal est étroitement adjacent à l'axe généralement vertical de la colonne (11).

Fig_1

EP 0 105 625 B1

Fig_2

Fig_3

Fig_4